# EUROPEAN PATENT SPECIFICATION

(11) **EP 0 621 605 B1**
(45) Date of publication and mention of the grant of the patent: **11.06.1997**
(21) Application number: 94850062.4
(22) Date of filing: 22.04.1994
(51) Int. Cl.: G21C 3/18, G21C 9/02

(54) **Nuclear fuel rod with failure alleviating means**
Kernbrennstab mit Mitteln zur Versagenseinschränkung
Barreau de combustible nucléaire pourvu de moyens de limiter une défaillance

(30) Priority: 23.04.1993 SE 9301373
(43) Date of publication of application: 26.10.1994
(73) Proprietor: STUDSVIK NUCLEAR AB, S-611 82 Nyköping (SE)
(72) Inventor: Mogard, Hilding, S-181 65 Lidingö (SE)
(74) Representative: Henningsson, Gunnar

(56) References cited:
- FR-A- 2 216 649
- FR-A- 2 683 667
- GB-A- 1 195 670
- GB-A- 2 215 114
- US-A- 3 988 075
- PATENT ABSTRACTS OF JAPAN vol. 17, no. 332 (P-1562) 23 June 1993 & JP-A-05 040 186
- PATENT ABSTRACTS OF JAPAN vol. 3, no. 148 (M-83) 7 December 1979 & JP-A-54 124 185

## Description

The present invention relates to nuclear fuel elements having cladding tubes of zirconium alloys for use in power-producing water-cooled, nuclear reactors. The invention also extends to nuclear reactors containing such nuclear fuel elements.

Incidental occurrence of a fuel cladding defect, such as fretting type failures, have occurred in light water reactors. Such primary failures are sometimes followed by secondary failures which frequently cause considerably larger activity releases.

The causes of the fuel failures in light water reactors vary but fretting type failures are predominant, in particular those caused by various types of loose objects, debris, which accidentally appear in the primary coolant system. Irrespective of the causes of the primary failures, these are sometimes followed by secondary failures which can cause considerably larger activity releases than the original primary failure. In such cases the subsequent degradation of the defect fuel elements by the formation of brittle hydride blisters in the cladding material seems to be a common destructive mechanism. The formation of such hydrides results in a common type of secondary failures, which typically give rise to a steadily increasing release of radioactivity to the coolant. On extended operation of defect fuel elements the enclosed water or steam tends to continuously hydrogenate the cladding material, uniformly as well as at local spots, while concurrently the fuel pellets oxidize and swell. As a result tensile forces build up in the clad wall, which on rare occasions act to initiate and gradually propagate long axially extending cracks in the cladding. Such brittle crack formation, known as "delayed hydrogen cracking", may impose intolerable release of radioactivity from the defect fuel element. Occasionally, fuel pellets are eroded and fuel particles spreading into the primary water coolant system may persist for years as radioactive sources.

The present invention has for a principle object to alleviate or at least significantly reduce secondary failures due to hydride blister formation or longitudinal clad cracking resulting from the occurrence of a fuel cladding defect.

Another object of the invention is to provide a nuclear fuel element wherein the release of radioactivity upon a fuel cladding defect is substantially reduced.

Yet another object of the invention is to provide a nuclear fuel element containing a thermal neutron-absorbing material which upon ingress of water through a fuel cladding defect will cause reduction of fissile energy generation, whereby extended operation of the fuel element can be feasible.

For these and other purposes which will be clear from the following disclosure the invention resides in a nuclear fuel element for use in power producing, water-cooled reactors comprising a circular metal cladding tube containing cylindrical fuel pellets defining an energy-generating or fuel section of said element, said element containing a thermal neutron-absorbing body in a solid state positioned within said element and outside of said energy-generating section. Said neutron-absorbing body is accessible to water entering the interior of the cladding tube through a cladding defect and is capable of dissolving, evaporizing, or disintegrating upon contact with the water, thereby migrating to the fuel section of the element resulting in reduced energy generation within said element.

The neutron-absorbing body in a solid state shall, in order to perform its desired neutron-absorbing function, contain a neutron-absorbing element or a compound of such element. Among suitable elements there may be mentioned boron, cadmiun, gadolinium and hafnium. It is particularly preferred to use oxides of such elements.

In a particularly preferred embodiment of the invention the neutron-absorbing body is constituted by or contains boron oxide, B₂O₃. Such material has been found to be particularly suited for the intended purpose due to its hygroscopic character, whereby it easily reacts with water to form boric acid.

The structure of the neutron-absorbing body in a solid state can vary from a homogeneous solid body constituted by the neutron-absorbing material, but can also have a structure of interconnected or open porosity, such as a foamy or spongy structure, facilitating dissolving, evaporizing, or disintegrating when contacted by water entering the interior of the fuel element. Thus the body may be either an integral one or may be composed of irregular minor bodies.

The location or position of the neutron-absorbing body within the cladding tube is critical in so far as it must be located at the border or outside of the energy-generating section of the fuel element so as not to disadvantageously interfere with the normal operation of the nuclear reactor due to its neutron-absorbing capacity. The neutron-absorbing body can be located at one end of the fuel element, such as inside a plenum space, but it may also be divided up into two separate parts, one part at each end of the fuel element.

It is particularly preferred to apply the principle of the present invention in relation to metal cladding tubes internally formed with a substantially cylindrical inner surface having a plurality of longitudinal ribs forming axially extending channels. Particularly preferred are fuel elements of the type described in GB-A-1 454 618 and EP 0 261 092. For details concerning such cladding tubes having interior ribs reference is made to said specifications, the disclosures of which are incorporated herein by reference. The presence of longitudinal ribs on the inside of the cladding tube greatly facilitates distribution of the neutron-absorbing material contained in water that has entered the cladding tube through a fuel cladding defect.

Said ribs are suitably evenly distributed over the inside of said cladding tube. The filler gas is preferably comprised of helium.

The invention also covers power-producing, water-cooled nuclear reactors containing nuclear fuel elements as described above.

The invention will now be further described by a non-limiting example with reference to the appended drawing, wherein:
Fig. 1 shows diagramatically a light water reactor fuel element embodying the invention in an axial cross-section; and
Fig. 2 is an enlarged view of a section along A-A in Fig. 1.

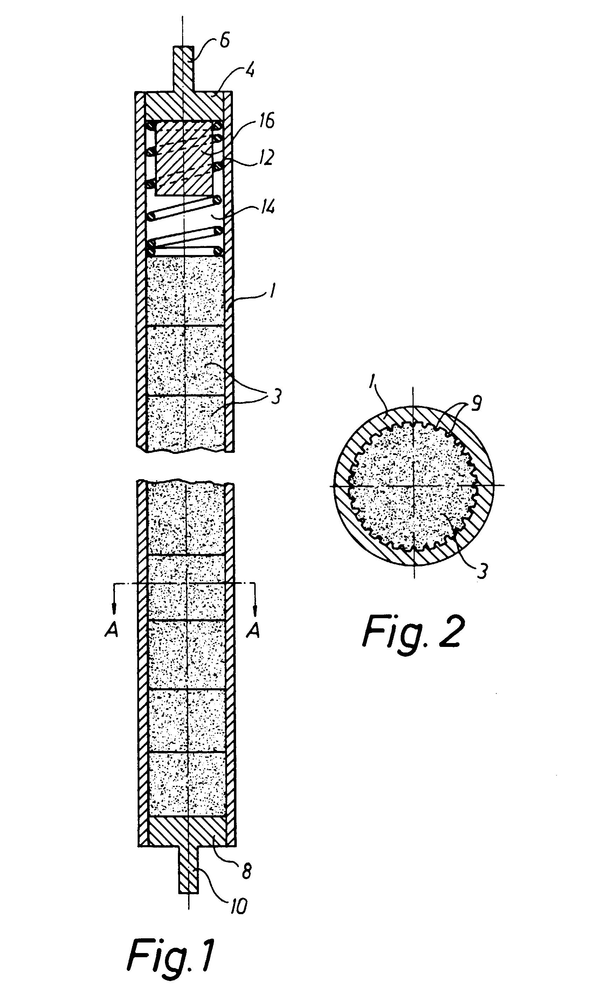

The fuel element as shown in Fig. 1 conforms except for the ribs on the inside surface of the cladding tube with a conventional type light water reactor fuel element. The fuel element shown in the drawing has a cladding tube 1 of a circular cylindrical configuration, and is provided with end-plugs 4,8. These end-plugs are provided with axially protruding pins 6 and 10, respectively, having for a purpose to maintain the fuel element in a fixed position in the reactor proper in a conventional manner. The cladding tube 1 is, in a conventional manner, made of a zirconium alloy, generally Zircaloy, as are also the two end-plugs 4 and 8. The cladding tube may according to preference also be provided with an inside or outside layer of other types of zirconium alloys than Zircaloy.

Cladding tube 1 contains sintered pellets 3 which are centerless ground to exact diameter dimensions, the pellet diameter being of the order 8 to 12 mm depending on the actual design. The fuel pellet column height is quite considerable, usually of the order of about 4 m.

Tube 1 fits around the pellets 3 with a certain cold assembly annular gap clearance necessary for safe operation of the element.

According to Fig. 1 a plenum space 14 is arranged for accomodating released fission gases and access of inert gas. Furthermore, a spring coil 12 acting on the pellet column is located in this plenum space 14. The spring coil 12 has mainly for a purpose to keep the fuel pellets 3 in place during transportation and handling of the fuel element. Plenum spaces can also be arranged at both ends of the fuel element. As an inert gas there may be used a noble gas, such as helium or argon, or a mixture thereof.

The cross-section shown in Fig. 2 illustrates the longitudinal ribs 9 extending along the inside of the cladding tube 1.

As shown in Fig. 1 a neutron-absorbing body 16 is placed inside the plenum space 14, i.e. outside of the energy-generating section of the fuel element. The reason for placing the neutron-absorbing body 16 outside of the fuel pellet column is, of course, to avoid undesirable interference with the normal operation of the element when placed in a nuclear reactor. In the embodiment now described the neutron-absorbing body 16 is constituted by boron oxide, B₂O₃. Although not shown in the drawing it is preferred that the body 16 has a structure of interconnected porosity, i.e. a large surface-to-volume ratio, such as a spongy or foamy structure, to facilitate penetration of water entering through a fuel cladding defect.

As previously indicated boron is a preferred neutron-absorbing element, especially present in the form of an oxide, such as B₂O₃. It is generally acknowledged, that many non-volatile oxides becomes more or less volatile in the presence of water vapour, and in general the volatility increases at increased temperature and vapour pressure. Often molecules containing hydroxyl groups are formed and it is known since long that B₂O₃ evaporizes together with water vapour. This involves the formation of mainly BO(OH) according to the equation: B₂O₃(s)+H₂O(g) 2BO(OH)(g), but also B(OH)₃ (g). On eventually reaching the very hot (about 1000°C) surfaces of the interior of the pellet column, the boron-containing gas will decompose and continously precipitate as B₂O₃(s).

Against this background boron oxide is preferred as a neutron-absorbing material in the nuclear fuel elements according to the present invention.

The embodiment described with reference to the appended drawing functions in operation briefly as follows.

The fuel element shown in the drawing is assumed to obtain a fuel cladding defect resulting in penetration of the cladding tube 1. Through such defect water enters the interior of fuel element 1 and finally reaches the upper end of the element where it contacts the neutron-absorbing body 16. Due to the chemical reactivity and hygroscopicity of the boron oxide contained in the body 16 the reaction products containing boron dissolve or evaporize or both and are contained in the water inside cladding tube 1 and gradually migrate through the element, viz. the axially extending channels 9 to all inside locations of the element. In view of this migration of boron-containing substances the nuclear fission is reduced resulting in decreased energy generation. This means that the potential formation of hydride blisters and long axial cracks in the cladding will be reduced, so that the radioactive contamination of the reactor system remains tolerable and no need for reactor power down-rating is called for. Longer operation cycles with defect fuel are therefore more feasible than would otherwise be the case without neutron-absorbing body present in the fuel element.

The internal longitudinal ribs on the inside of cladding tube 1 greatly facilitate migration of the boron reaction products and are therefore preferred.

While the present invention has been described with reference to a preferred embodiment thereof, it is obvious to the skilled artisan that modifications can be made to the embodiment shown. Thus, the longitudinally extending ribs inside the cladding tube 1, although preferred, may not be necessary, and the fuel element design may be modified also in other respects. All such modifications included within the scope of the appended claims are intended to be covered by the present invention.

## Claims

1. A nuclear fuel element for use in power-producing, water-cooled, nuclear reactors, comprising a circular zirconium base cladding tube containing cylindrical fuel pellets defining an energy-generating or fuel section of said element, and an inert filler gas, characterized by a thermal neutron-absorbing body in a solid state positioned within said cladding tube and outside of said fuel section but accessible to water entering the interior of said cladding tube through a cladding defect and capable of dissolving, evaporizing, or disintegrating upon contact with said water, thereby migrating to other parts including the fuel section of the interior of the element.

2. A nuclear fuel element according to claim 1, wherein said neutron-absorbing body comprises a material selected from the group consisting of oxides of boron, cadmium, gadolinium, and hafnium.

3. A nuclear fuel element according to claim 2, wherein said neutron-absorbing body comprises B₂O₃.

4. A nuclear fuel element according to any preceding claim, wherein said neutron-absorbing body has a large surface-to-volume ratio, such as a spongy or foamy structure, to facilitate evaporization, dissolving or disintegration thereof.

5. A nuclear fuel element according to any preceding claim, wherein said neutron-absorbing body is positioned at one end or both ends within the element.

6. A nuclear fuel element according to any preceding claim, wherein said metal cladding tube is formed internally with a substantially cylindrical inner surface having a plurality of longitudinal ribs forming axially extending channels.

7. A nuclear fuel element according to any preceding claim, wherein a plenum space is arranged at at least one end of the element for accomodating said neutron-absorbing body and released fission gases.

8. A nuclear fuel element according to claim 6 or 7, wherein said ribs are evenly distributed over the inside of said cladding tube.

9. A nuclear fuel element according to any preceding claim, wherein said filler gas comprises helium.

10. A power-producing, water-cooled nuclear reactor containing nuclear fuel elements according to any preceding claim.

## Patentansprüche

1. Kernbrennelement für die Verwendung in energieerzeugenden, wassergekühlten Kernreaktoren mit einem runden Hüllrohr auf Zirkoniumbasis, das einen energieerzeugenden oder Brennstoffabschnitt des Elementes begrenzende zylindrische Brennstoffpellets und ein inertes Füllstoffgas enthält, **gekennzeichnet durch** einen thermische Neutronen absorbierenden Körper in einem festen Zustand, der in dem Hüllrohr und außerhalb des Brennstoffabschnittes angeordnet ist, aber für Wasser, das in das Innere des Hüllrohres durch einen Hüllendefekt eindringt, zugänglich ist und sich bei Berührung mit diesem Wasser auflösen, verdampfen oder zersetzen kann und dabei zu anderen Teilen einschließlich des Brennstoffabschnittes des Inneren des Elementes wandert.

2. Kernbrennelement nach Anspruch 1, bei dem der Neutronen absorbierende Körper ein Material umfaßt, das aus der Gruppe ausgewählt ist, welche aus Oxiden von Bor, Cadmium, Gadolinium und Hafnium besteht.

3. Kernbrennelement nach Anspruch 2, bei dem der Neutronen absorbierende Körper B₂O₃ umfaßt.

4. Kernbrennelement nach einem der vorausgehenden Ansprüche, bei dem der Neutronen absorbierende Körper ein großes Verhältnis von Oberfläche zu Volumen, wie eine schwammartige oder schaumartige Struktur hat, um eine Verdampfung, ein Auflösen oder eine Zersetzung desselben zu erleichtern.

5. Kernbrennelement nach einem der vorausgehenden Ansprüche, bei dem der Neutronen absorbierende Körper an einem Ende oder an beiden Enden in dem Element angeordnet ist.

6. Kernbrennelement nach einem der vorausgehenden Ansprüche, bei dem das Metallhüllrohr im Inneren mit einer im wesentlichen zylindrischen Innenoberfläche ausgebildet ist, die mehrere sich längs erstreckende Rippen hat, die sich axial erstreckende Kanäle bilden.

7. Kernbrennelement nach einem der vorausgehenden Ansprüche, bei dem ein Plenumraum an wenigstens einem Ende des Elementes angeordnet ist, um den Neutronen absorbierenden Körper und freigesetzte Spaltungsgase aufzunehmen.

8. Kernbrennelement nach Anspruch 6 oder 7, bei dem die Rippen gleichmäßig über die Innenseite des Hüllrohres verteilt sind.

9. Kernbrennelement nach einem der vorausgehenden Ansprüche, bei dem das Füllstoffgas Helium umfaßt.

10. Energieerzeugender, wassergekühlter Kernreaktor, der Kernbrennelemente nach einem der vorausgehenden Ansprüche enthält.

## Revendications

1. Elément de combustible nucléaire susceptible d'être utilisé dans des réacteurs nucléaires producteurs d'énergie refroidis à l'eau, comprenant un tube de gainage à base de zirconium circulaire contenant des pastilles de combustible cylindriques définissant une section génératrice d'énergie ou section de combustible dudit élément, et un gaz de charge inerte, caractérisé par un corps absorbant les neutrons thermiques à l'état solide disposé à l'intérieur dudit tube de gainage et à l'extérieur de ladite section de combustible, mais accessible à l'eau pénétrant à l'intérieur dudit tube de gainage par un défaut du gainage et capable de se dissoudre, de s'évaporer ou de se désintégrer par contact avec ladite eau, en sorte de migrer vers d'autres parties, notamment la section de combustible de l'intérieur de l'élément.

2. Elément de combustible nucléaire selon la revendication 1, dans lequel ledit corps absorbant les neutrons comprend un matériau sélectionné dans le groupe comprenant les oxydes de bore, de cadmium, de gadolinium et d'hafnium.

3. Elément de combustible nucléaire selon la revendication 2, dans lqeul ledit corps absorbant les neutrons comprend du B₂O₃.

4. Elément de combustible nucléaire selon l'une quelconque des revendications précédentes, dans lequel ledit corps absorbant les neutrons présente un grand rapport surface/volume correspondant notamment à une structure spongieuse ou alvéolaire pour faciliter son évaporation, sa dissolution ou sa désintégration.

5. Elément de combustible nucléaire selon l'une quelconque des revendications précédentes, dans lequel ledit corps absorbant les neutrons est disposé à une extrémité ou aux deux extrémités à l'intérieur de l'élément.

6. Elément de combustible nucléaire selon l'une quelconque des revendications précédentes, dans lequel ledit tube de gainage métallique présente à l'intérieur une surface interne sensiblement cylindrique ayant une série de nervures longitudinales formant des canaux s'étendant axialement.

7. Elément de combustible nucléaire selon l'une quelconque des revendications précédentes, dans lequel un espace vide est ménagé à au moins une extrémité de l'élément pour recevoir ledit corps absorbant les neutrons et les gaz de fission dégagés.

8. Elément de combustible nucléaire selon la revendication 6 ou 7, dans lequel lesdites nervures sont unformément distribuées sur l'intérieur dudit tube de gainage.

9. Elément de combustible nucléaire selon l'une quelconque des revendications précédentes, dans lequel ledit gaz de charge comprend de l'hélium.

10. Réacteur nucléaire producteur d'énergie refroidi à l'eau, contenant des éléments de combustible nucléaire selon l'une quelconque des revendications précédentes.
